# EUROPÄISCHE PATENTSCHRIFT

(11) **EP 1 960 753 B1**
(45) Veröffentlichungstag und Bekanntmachung des Hinweises auf die Patenterteilung: **01.02.2012**
(21) Anmeldenummer: 06761904.9
(22) Anmeldetag: 24.04.2006
(51) Int. Cl.: G01M 1/04, F16H 55/18

(54) **HALTEVORRICHTUNG FÜR EINE FELGE EINES FAHRZEUGRADES**
MAINTAINING DEVICE FOR A RIM OF A VEHICLE WHEEL
DISPOSITIF DE MAINTIEN POUR JANTE DE ROUE DE VEHICULE

(30) Priorität: 16.12.2005 DE 102005060765; 23.01.2006 DE 102006003329; 07.02.2006 DE 102006005790
(43) Veröffentlichungstag der Anmeldung: 27.08.2008
(73) Patentinhaber: Warkotsch, Horst, 30938 Burgwedel (DE)
(72) Erfinder: OHNESORGE, Axel, 30938 Burgwedel (DE); WRONSKI, Hans-Joachim, 31275 Lehrte (DE)
(74) Vertreter: Gesthuysen, von Rohr & Eggert
(86) Internationale Anmeldenummer: PCT/EP2006/003731
(87) Internationale Veröffentlichungsnummer: WO 2007/073779

(56) Entgegenhaltungen:
- DE-A1- 2 619 618
- DE-A1- 2 816 183
- DE-A1- 4 426 325
- US-A- 4 070 915

## Beschreibung

Die Erfindung betrifft eine Haltevorrichtung nach dem Oberbegriff von Anspruch 1.

Aus der US 4 167 118 ist bereits eine Vorrichtung mit den Oberbegriffsmerkmalen des Anspruchs 1 bekannt. Die bekannte Vorrichtung weist zur formschlüssigen Kopplung der Drehbewegung der Halteelemente an den drehbar gelagerten Halteelementen jeweils Kopplungsstifte auf, die jeweils in radiale Schlitze eines ringförmig ausgebildeten Kopplungselementes eingreifen, das an einer Grundplatte angeordnet und um die Achse einer zentralen Ausnehmung in der Grundplatte drehbar ist. Durch Drehung des Kopplungselementes wird eine Mitnahme der Kopplungsstifte und damit die Drehung der Halteelemente um ihre Drehachse bewirkt. Beim Drehen der Halteelemente ändert sich der radiale Abstand von exzentrisch an den Halteelementen gelagerten Druckstiften zu der Achse der zentralen Ausnehmung der Grundplatte und der gegenseitige Umfangsabstand der Druckstifte. Dadurch ist es möglich, den radialen Abstand der Druckstifte von der zentralen Ausnehmung und den gegenseitigen Umfangsabstand der Druckstifte in Abhängigkeit von dem Lochkreisdurchmesser von Befestigungslöchern einer Felge eines auszuwuchtenden Fahrzeugrades anzupassen.

Beim Aufschieben der bekannten Vorrichtung auf eine Welle einer Auswuchtmaschine und beim Andrücken an die Felge des Fahrzeugrades rasten die Druckstifte endseitig in Befestigungslöcher der Felge ein, so daß beim Spannen der Vorrichtung gegen den Anlageflansch der Auswuchtmaschine die Felge fest gegen den Anlageflansch gepreßt wird. Da die Spannkräfte nur durch die Enden der Druckstifte auf die Befestigungslöcher der Felge übertragen werden, können keine anderen Teile der Oberfläche der Felge durch die Druckstifte beschädigt werden, was nicht nur bei lackierten Stahlfelgen von Vorteil ist, sondern insbesondere auch bei Felgen aus eloxiertem Leichtmetall, z.B. Aluminum.

Von Nachteil bei der aus der US 4 167 118 bekannten Vorrichtung ist, daß die formschlüssige Kopplung der Drehbewegung der Halteelemente aufgrund von Toleranzen der Fertigung nicht spielfrei möglich ist. Dies hat zur Folge, daß eine exakte Einhaltung der gegenseitigen Umfangsabstände der Druckstifte und auch ihrer radialen Lage zur Welle einer Auswuchtmaschine nicht gewährleistet ist, so daß durch die bekannte Vorrichtung beim Auswuchtvorgang Unwuchtfehler auftreten können, die zu einem fehlerhaften Auswuchten des Fahrzeugrades führen.

Aus der US 4 070 915 ist eine Haltevorrichtung für eine Felge eines Fahrzeugrades bekannt, bei der die Felge unmittelbar an der Vorrichtung befestigt wird. Die bekannte Vorrichtung weist eine Grundplatte mit einer Mehrzahl von in gleichem gegenseitigen Umfangsabstand und in gleichem radialen Abstand zu einer zentralen Ausnehmung der Grundplatte angeordneten und auf der Grundplatte gelagerten Halteelementen auf, wobei jedes Halteelement einen exzentrisch gelagerten Gewindebolzen zur Befestigung der Felge an der Vorrichtung aufweist. Zur formschlüssigen Kopplung der Drehbewegung der Halteelemente ist ein zu der zentralen Ausnehmung der Grundplatte koaxial angeordnetes und auf der Grundplatte drehbar gelagertes Getrieberad vorgesehen. Das Getrieberad ist an seiner Umfangsfläche abschnittsweise verzahnt, wobei die verzahnten Abschnitte des Getrieberades mit verzahnten Abschnitten der Halteelemente kämmen. Durch Drehen des Getrieberades ist es möglich, den radialen Abstand der Gewindebolzen zu der zentralen Ausnehmung der Grundplatte und den gegenseitigen Umfangsabstand der Gewindebolzen zu verstellen. Die bekannte Vorrichtung weist ebenfalls den Nachteil auf, daß die Übertragung der Bewegung zwischen den kämmenden Verzahnungsabschnitten nicht spielfrei möglich ist. Dies hat wiederum zur Folge, daß eine exakte Einhaltung der gegenseitigen Umfangsabstände der Gewindebolzen und auch ihrer radialen Lage zur Welle der Auswuchtmaschine nicht gewährleistet ist, so daß es beim Auswuchtvorgang durch die Vorrichtung zu Unwuchtfehlem kommen kann.

Aus der DE 26 19 618 A1 ist eine Radhalterung für eine Radauswucht- oder eine Reifenwechselmaschine mit einer zur Aufnahme einer Felge eines Rades dienenden drehbar gelagerten Trägerplatte bekannt. An der Trägerplatte sind in gleichem Radialabstand von der Trägerplattendrehachse Satellitenräder drehbar gelagert, wobei zur Kopplung der Drehbewegung der Satellitenräder eine Zentralradgruppe vorgesehen ist. Die Zentralradgruppe kämmt mit sämtlichen Satellitenrädern. Wenn eines der Satellitenräder gedreht wird, werden über die Zentralradgruppe Radbefestigungsbolzen, die auf den Satellitenrädem exzentrisch angeordnet sind, auf zur Drehachse der Trägerplatte konzentrischen Kreisen verlagert. Auf die Zentralradgruppe kann eine Kraft ausgeübt werden, durch welche die Zeutralgruppe radial zur Drehachse der Trägerplatte gespreizt wird, um ihre Zähne in vollen Eingriff mit den Zähnen der Satellitenräder zu bringen. Dadurch ist es möglich, daß Spiel zwischen den Zähnen der Zentralradgruppe und den Zähnen der Satellitenräder zu verringern, ohne die Drehbewegung der Zahnräder zu beeinträchtigen. Die bekannte Radhalterung ist allerdings konstruktiv aufwendig ausgestaltet, was den Montageaufwand und die Herstellungskosten erhöht. Im übrigen hat sich in der Praxis gezeigt, daß es durch Kraftausüben auf die Zentralradgruppe dazu kommen kann, daß sich die Zähne der Zentralradgruppe zwischen den Zähnen der Satellitenräder verkeilen. Eine Drehbewegung der Zahnräder ist dann nicht mehr möglich.

Aus der DE-PS 1 195 071 ist eine Vorrichtung zum zentrierenden Aufspannen von Fahrzeugrädern auf einer drehbar auf einer Tragachse gelagerten Scheibe mit von dieser getragenen Planetenrädern bekannt. Zur Befestigung mit der Felge sind Tragbolzen vorgesehen, die exzentrisch auf den Planetenrädern gelagert sind. Die Planetenräder sind durch ein auf der Tragachse angeordnetes Sonnenrad verstellbar, wobei das Sonnenrad als die Planetenräder mitnehmendes Reibrad ausgebildet ist. Durch Verdrehen des Sonnenrades können die Tragbolzen gleichmäßig verstellt werden, wobei der relativ gleichbleibende Abstand der Tragbolzen im wesentlichen gewahrt bleibt und der Kreisringdurchmesser sich für alle Tragbolzen gleichmäßig ändert. Dabei wird jedes Planetenrad unabhängig von den anderen Planetenrädern soweit verdreht, bis der von ihm beeinflußte Tragbolzen eine Ausrichtendstellung erreicht hat. Dadurch soll bei der bekannten Vorrichtung sichergestellt werden, daß das zu prüfende Rad durch alle Tragbolzen in der genauen Ausrichtlage zu der Auswuchtachse der Auswuchtmaschine gehalten ist. Die vorbeschriebene Vorrichtung weist den Nachteil auf, daß die reibschlüssige Kopplung der Drehbewegung der Halteelemente mit einem erhöhten Verschleiß verbunden ist, was dazu führt, daß das Sonnenrad bei der bekannten Vorrichtung in kurzen Zeitabständen erneuert werden muß. Dies trägt zu hohen Instandhaltungskosten der bekannten Vorrichtung bei. Zudem kann es zu einem Durchrutschen der Planetenräder kommen, was zu einer ungewollten Verstellung der Tragbolzen führen kann.

Aus der DE 28 16 183 A1 ist bekannt, das Zahnspiel dadurch zu beseitigen, daß ein Antriebszahnrad mit ersten Zähnen in formschlüssiger Verbindung steht mit einem Zwischenzahnrad mit zweiten Zähnen und darüber hinaus noch eine reibschlüssige Triebverbindung zwischen diesen Zahnrädern vorhanden ist, die durch einen in das Zwischenzahnrad eingelassenen, im Querschnitt kreisförmigen O-Ring gebildet wird aus verschleißfestem, gummielastischem Werkstoff mit hohem Reibungsbeiwert. Der größtenteils unterhalb des Zahnfußkreises des Zwischenrades eingelassene Gummiring arbeitet dabei mit den Köpfen der Zähne des treibenden Zahnrades zusammen. Dabei ist in die Verzahnung des Zwischenrades eine Nut eingearbeitet, in der sich der Gummiring befindet.

Aus der DE 44 26 325 A1 ist eine Anti-Klappervorrichtung für ein Paar von miteinander kämmenden Zähnen in einem Getriebe, zwischen denen ein Spiel vorhanden ist, bekannt. Ein elastomeres Material steht auf einem der Zahnräder mit Zähnen des anderen Zahnrades in Kontakt, wobei das elastomere Material derart radial an einem Zahnrad angeordnet ist, daß deren Außendurchmesser größer als der Fußkreisdurchmesser des damit versehenen Zahnrades ist.

Aufgabe der vorliegenden Erfindung ist es, eine Haltevorrichtung der eingangs beschriebenen Art zur Verfügung zu stellen, mit der die gekoppelte Verstellung der Halteelemente weitgehend spielfrei und in einfacher Weise möglich ist.

Die vorgenannte Aufgabe ist bei einer Haltevorrichtung durch die Merkmale von Anspruch 1 gelöst.

Der Grundgedanke der Erfindung besteht darin, das Spiel bei der Kopplung der Drehbewegung der Halteelemente dadurch zu verringern oder sogar weitgehend auszuschalten, daß zusätzlich zu der formschlüssigen Kopplung der Halteelemente weitere Kopplungsmittel für eine reibschlüssige Kopplung vorgesehen sind. Dadurch wird sichergestellt, daß es bei der erfindungsgemäßen Vorrichtung nicht zu Unwuchtfehlern kommen kann, die beim Stand der Technik als Folge des vergleichsweise großen Spiels zwischen den zur formschlüssigen Kopplung vorgesehenen Kopplungsmitteln auftreten. Die formschlüssige Kopplung ermöglicht gleichzeitig die Übertragung ausreichend hoher Verstellkräfte, die zum gekoppelten Verdrehen der Haltemittel erforderlich sind. Durch die kombinierte reib- und formschlüssige Kopplung der Drehbewegung der Halteelemente wird erfindungsgemäß eine besonders sichere Verstellmöglichkeit der Halteelemente zur Verfügung gestellt, die ein sehr geringes Spiel aufweist.

Darüber hinaus ist erfindungsgemäß zum bedarfsweisen Feststellen der Halteelemente eine Feststelleinrichtung vorgesehen. Nach dem Einstellen der Haltemittel auf einen bestimmten Lochkreisdurchmesser der Felge des für den Auswuchtvorgang vorgesehenen Fahrzeugrades kann der Radialabstand der Haltemittel zu der zentralen Ausnehmung und der gegenseitige Umfangsabstand der Haltemittel mittels der Feststelleinstelleinrichtung in der gewünschten Stellung fixiert werden. Dies kann beispielsweise erfolgen, wenn die Haltevorrichtung noch nicht auf die Welle der Auswuchtmaschine aufgesetzt ist. In diesem Zusammenhang ist es möglich, den Umfangsabstand der Haltemittel auf den Lochkreisdurchmesser der Felge einzustellen, während das Fahrzeugrad auf dem Boden liegt. Dabei kann die erfindungsgemäße Haltevorrichtung einfach von oben auf die Felge gedrückt werden, wobei sich die Haltemittel ohne weiteres auf den Lochkreisdurchmesser der Felge einstellen. Die Haltemittel können in diesem Sinne selbsteinstellend sein. Dies setzt eine leichte Verstellbarkeit der Haltemittel im nicht-fixierten Zustand voraus. Dadurch wird der Einstellvorgang der Haltevorrichtung vereinfacht. Nachdem die Haltemittel in der gewünschten Stellung mittels der Feststelleinrichtung fixiert worden sind, können anschließend die Felge des Fahrzeugrades und die Haltevorrichtung auf die Welle der Auswuchtmaschine aufgeschoben und die Felge zwischen der Haltevorrichtung und dem Anlageflansch der Welle verspannt werden. Durch das Feststellen bzw. Fixieren der Halteelemente und damit der Haltemittel kann es nach dem Aufschieben von Felge und Haltevorrichtung auf die Welle nicht mehr zu einer ungewollten Verstellung der Haltemittel kommen. Dadurch kann gewährleistet werden, daß die Felge durch alle Haltemittel in der gewünschten Position gegen den Anlageflansch der Welle angedrückt wird.

Es versteht sich, daß die Erfindung nicht auf solche Vorrichtungen beschränkt ist, die zum Andrücken der Felge an einen Anlageflansch einer Welle einer Auswuchtmaschine vorgesehen sind. Die Erfindung kann auch bei einer Haltevorrichtung verwirklicht sein, die eine Grundplatte aufweist, mit der die Felge verschraubt wird, wobei die Haltemittel als Gewindebolzen ausgeführt sein können.

Die weiteren Kopplungsmittel können durch eine reibschlüssige Verbindung zwischen wenigstens einer Umfangsfläche des Halteelementes und wenigstens einer Umfangsfläche des Kopplungselementes gebildet sein. Dadurch kann in einfacher Weise und bei geringem Konstruktionsaufwand jedwedes Spiel bei der Drehbewegung der Halteelemente ausgeschlossen werden. In diesem Zusammenhang kann vorgesehen sein, daß zwischen der Umfaugsfläche des Halteelementes und der Umfangsfläche des Kopplungselementes wenigstens ein Reibmittel angeordnet ist, beispielsweise eine Auflage aus Kunststoff, vorzugsweise aus Gummi.

Sofern das Halteelement als Satellitenrad und das Kopplungselement als vorzugsweise ringförmiges Sonnenrad ausgebildet sind und ein Planetengetriebe bilden, können die formschlüssigen Kopplungsmittel in einfacher Weise durch miteinander kämmende Zahnkränze des Halteelementes und des Kopplungselementes gebildet sein. Der Zahnkranz des Halteelementes und/oder Zahnkranz des Kopplungselementes können wenigstens eine Umfangsnut aufweisen, wobei zur Bildung einer reibschlüssigen Verbindung zwischen dem Halteelement und dem Kopplungselement wenigstens ein Reibmittel in die Umfangsnut des Halteelementes und/oder in die Umfangsnut des Kopplungselementes eingebettet sein kann. Die Umfangsnuten sind vorzugsweise gegenüberliegend angeordnet.

Bei dem Reibmittel kann es sich um einen O-Ring handeln aus Kunststoff bzw. aus Gummi, der teilweise in die Umfangsnut des Halteelementes und/oder des Kopplungselementes eingebettet ist. Reibmittel der vorgenannten Art sind in vielfältigen Ausführangsformen erhältlich und kostengünstig. Darüber hinaus lassen sie sich in einfacher Weise auf das Halteelement und/oder das Kopplungselement aufziehen.

Bei einer bevorzugten Ausführungsform der Erfindung ist vorgesehen, daß die Feststelleinrichtung ein Feststellelement mit wenigstens einem Feststellmittel zum reib- oder formschlüssigen Feststellen des Kopplungselementes aufweist. Nach dem Feststellen des Kopplungselementes ist eine Drehbewegung des Kopplungselementes nicht mehr möglich. Dadurch wird eine sichere Fixierung der Halteelemente bzw. der Haltemittel in einer gewünschten Andruck- bzw. Haltestellung gewährleistet, wobei die Haltemittel auf einen erforderlichen Lochkreisdurchmesser der Felgenlöcher eingestellt sind.

Um in einfacher Weise das Feststellen des Kopplungselementes zu bewirken, und damit eine weitere Drehbewegung der Halteelemente und eine Verstellung des Radialabstandes der Haltemittel zu der zentralen Ausnehmung einerseits und eine Verstellung des gegenseitigen Umfangsabstands der Haltemittel andererseits zu verhindern, kann vorgesehen sein, daß das Feststellelement koaxial zum Kopplungselement und in axialer Richtung relativ zum Kopplungselement verstellbar angeordnet ist. Die Feststelleinrichtung ist dabei derart ausgebildet, daß durch Verstellen des Feststellelementes das Kopplungselement über das Feststellmittel mit einer zum Feststellen ausreichenden Haltekraft beaufschlagbar ist. Die Haltekraft muß ausreichend groß sein, um eine Verstellung des Kopplungselementes ausschließen zu können.

Im Zusammenhang mit der axialen Verstellbarkeit des Feststellelementes kann vorgesehen sein, daß an der Grundplatte wenigstens eine Anschlagfläche für eine Stirnseite des Kopplungselementes vorgesehen ist und daß das Kopplungselement durch Verstellen des Feststellelementes gegen die Anschlagfläche gepreßt wird.

Der Zahnkranz eines Halteelementes oder aller Halteelemente kann bereichsweise über den äußeren Rand der Grundplatte überstehen und einen Betätigungsabschnitt zum gekoppelten Verdrehen der Halteelemente bilden. Die vorstehenden Abschnitte des Zahnkranzes können sicher mit einem Finger gegriffen werden, um so die Verstellung der Halteelemente zur Einstellung der Haltemittel auf den Lochkreisdurchmesser der Befestigungslöcher einer Felge in einfacher Weise und ohne weitere Hilfsmittel bewirken zu können. Als Haltmittel kann ein exzentrisch zur Drehachse des Halteelementes angeordneter einen Bolzenfuß und einen Bolzenkopf aufweisender Druckbolzen vorgesehen sein, wobei der Bolzenkopf federbelastet und vorzugsweise lösbar mit dem Bolzenfuß verbunden sein kann. Dabei können für unterschiedliche Felgen unterschiedliche Kopfformen der Bolzenköpfe vorgesehen sein. Bei federbelastetem Bolzenkopf ist ein Fertigungstoleranzausgleich möglich.

Im einzelnen gibt es eine Vielzahl von Möglichkeiten, die erfindungsgemäße Klemmvorrichtung auszugestalten und weiterzubilden, wobei einerseits auf die abhängigen Patentansprüche und andererseits auf die nachfolgende detaillierte Beschreibung eines bevorzugten Ausführungsbeispiels der Erfindung unter Bezugnahme auf die Zeichnung verwiesen wird. In der Zeichnung zeigt
- Fig. 1: eine Ausführungsform einer erfindungsgemäßen Haltevorrichtung für eine Felge eines Fahrzeugrades in einer Draufsicht,
- Fig. 2: die in Fig. 1 dargestellte Haltevorrichtung in einer Querschnittsansicht von der Seite und
- Fig. 3: eine weitere Querschnittsansicht der in Fig. 1 dargestellten Haltevorrichtung von der Seite.

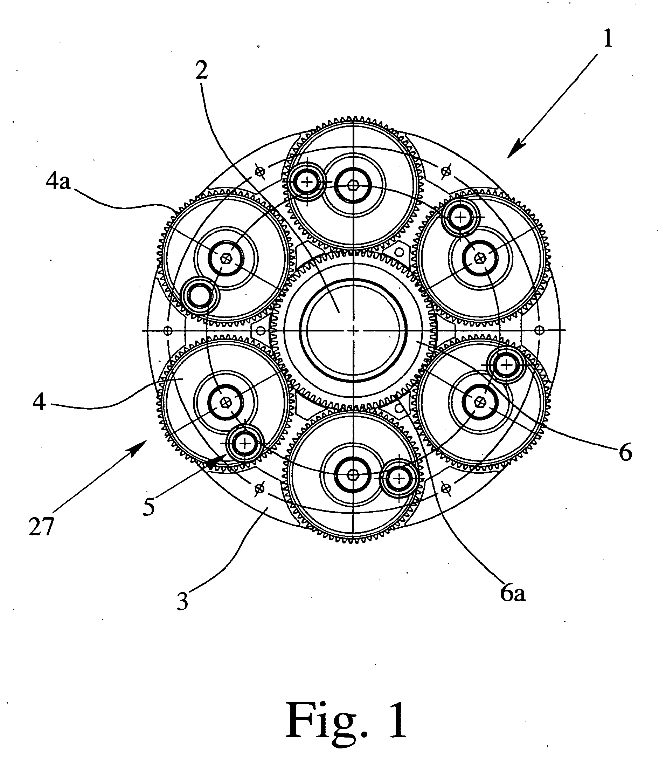

In Fig. 1 ist eine Haltevorrichtung 1 für eine nicht dargestellte Felge eines Fahrzeugrades dargestellt. Die Haltevorrichtung 1 weist eine eine zentrale Ausnehmung 2 aufweisende Grundplatte 3 zum Aufschieben auf eine Welle einer nicht dargestellten Auswuchtmaschine auf. Zum Andrücken der Felge an einen Anlageflansch der Welle der Auswuchtmaschine sind eine Mehrzahl von in gleichem gegenseitigen Umfangsabstand und in gleichem radialen Abstand zu der zentralen Ausnehmung 2 angeordnete drehbar auf der Grundplatte 3 gelagerte Halteelemente 4 vorgesehen, wobei jedes Halteelement 4 ein Haltemittel aufweist. Als Haltemittel sind exzentrisch gelagerte Druckbolzen 5 vorgesehen. Die Halteelemente 4 sind als scheibenförmige Satellitenräder ausgebildet. Grundsätzlich können die Halteelemente auch eine nichtkreisförmige Form aufweisen. Zur formschlüssigen Kopplung der Drehbewegung der Halteelemente 4 ist ein als Sonnenrad ausgebildetes Kopplungselement 6 vorgesehen, wobei miteinander kämmende Zahnkränze 4a, 6a der Halteelemente 4 und des Kopplungselementes 6 Kopplungsmittel eines Planetengetriebes bilden. Das Halteelement 4 weist an seinem Umfang den Zahnkranz 4a und das Kopplungselement 6 an seinem Umfang den Zahnkranz 6a auf.

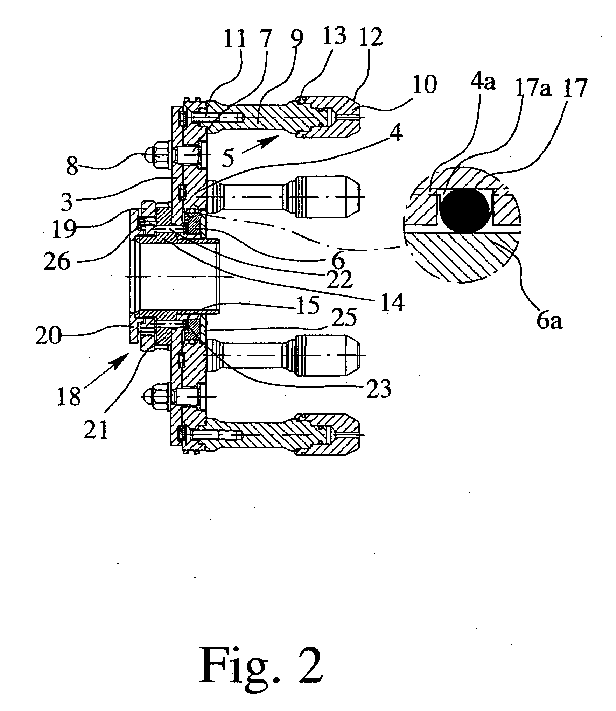

Das Halteelement 4 ist gemäß Fig. 2 mittels eines Drehlagers an der Grundplatte 3 gehalten, das im wesentlichen durch einen Schraubbolzen 7 gebildet ist, der mittels einer Hutmutter 8 an der Grundplatte 3 befestigt ist. An dem Halteelement 4 ist der einen Bolzenfuß 9 und einen Bolzenkopf 10 aufweisende Druckbolzen 5 mittels einer Schraube 11 befestigt. Der Bolzenkopf 10 weist eine vordere Fläche 12 auf, die zum zentrischen Einrasten in ein komplementär geformtes Befestigungsloch einer Felge dient. Darüber hinaus ist eine Wellenfeder 13 vorgesehen, die gegen eine umlaufende Schulter des Bolzenfußes 9 anliegt und gegen den auf den Bolzenfuß 9 aufgesetzten Bolzenkopf 10 wirkt. Durch die Federbelastung des Bolzenkopfes 10 können Fertigungstoleranzen ausgeglichen werden. Im übrigen ist der Bolzenkopf 10 lösbar mit dem Bolzenfuß 9 verbunden. Dadurch ist es möglich, unterschiedlich ausgebildete Bolzenköpfe 10 in Abhängigkeit von der Geometrie des Befestigungsloches der Felge mit dem Bolzenfuß 9 zu verbinden.

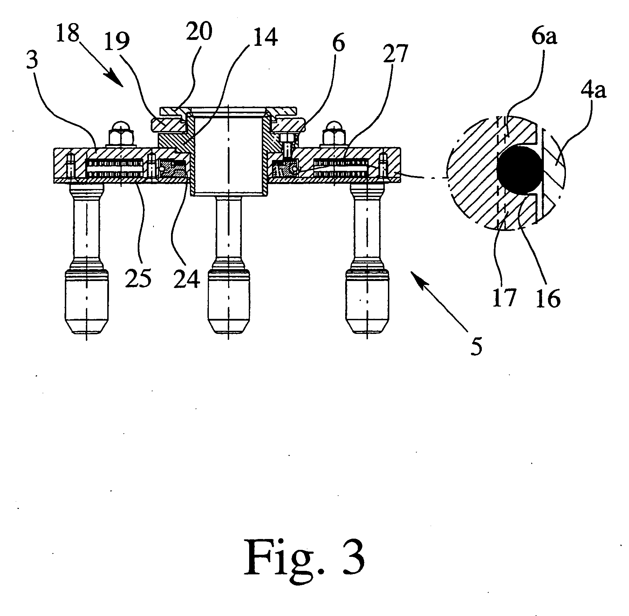

Die zentrale Ausnehmung 2 ist nicht unmittelbar in der Grundplatte 3 gebildet, sondern in einer Buchse 14, die in einer entsprechenden Ausnehmung der Grundplatte 3 eingepreßt ist. Das Kopplungselement 6 ist drehbar auf einem ringförmigen Ansatz 15 der Grundplatte 3 gelagert. Der Zahnkranz 6a des Kopplungselementes 6 weist eine in Fig. 3 dargestellte Nut 16 auf, in die als Reibmittel ein O-Ring 17 eingebettet ist.

Der Zahnkranz 4a des Halteelementes 4 weist gegenüberliegend zu der Nut 16 des Zahnkranzes 6a des Kopplungselementes 6 eine umlaufende Nut 17a auf, gegen die der O-Ring 17 im Bereich der kämmenden Zahnkränze 4a, 6a reibschlüssig anliegt. Dadurch wird eine reibschlüssige Kopplung zwischen den Halteelementen 4 und dem Kopplungselement 6 zur Verfügung gestellt, durch die jegliches Spiel bei der gekoppelten Drehbewegung der Halteelemente 4 ausgeschlossen wird.

Darüber hinaus weist die Haltevorrichtung 1 eine Feststelleinrichtung 18 auf zur reibschlüssigen Feststellung des Kopplungselementes 6. Die Feststelleinrichtung weist als Feststellelement eine Randelmutter 19 auf, die zwischen einem auf die Buchse 14 endseitig aufgepreßten Druckring 20 und einem Flansch 21 der Buchse 14 in axialer Richtung der Haltevorrichtung 1 relativ zum Kopplungselement 6 verstellbar angeordnet ist. Die Randelmutter 19 ist auf ein Außengewinde der Buchse 14 aufgeschraubt und koaxial zum Kopplungselement 6 angeordnet. Beim Aufschrauben der Randelmutter 19 werden Feststellmittel, im vorliegenden Fall Zylinderstifte 22, die in einer Durchgangsbohrung der Buchse 14 und der Grundplatte 3 in axialer Richtung verschiebbar angeordnet sind, in Richtung auf ein scheibenförmiges Ringelement 23 verschoben, wobei das Ringelement 23 in eine Ausnehmung des Kopplungselementes 6 eingebettet ist. Durch Verstellen der Randelmutter 19 wird über die Zylinderstifte 22 eine Anpreß- bzw. Haltekraft auf das Kopplungselement 6 ausgeübt, wodurch dieses gegen eine Anschlagfläche 24 eines Gehäusedeckels 25 gepreßt wird. Zwischen dem Kopplungselement 6 und dem Gehäusedeckel 25 kann eine Distanzscheibe vorgesehen sein, so daß beim Verstellen der Randelmutter 19 das Kopplungselement 6 gegen die Distanzscheibe verstellt wird, wobei die Distanzscheibe gegen die Anschlagfläche 24 des Gehäusedeckels 25 anliegt. Die Distanzscheibe kann in eine Nut auf der Stirnseite des Kopplungselementes 6 flächenbündig eingebettet sein, so daß sich beim Verstellen der Randelmutter 19 eine im wesentlichen vollflächige Anlage des Kopplungselementes 6 und der Distanzscheibe gegen die Anschlagfläche 24 des Gehäusedeckels 25 ergibt. Dadurch kann der Anpreßdruck, der für ein reibschlüssiges Feststellen des Kopplungselementes 6 erforderlich ist, gleichmäßig über die Stirnfläche des Kopplungselementes 6 verteilt werden. Die Distanzscheibe ist im übrigen dann von Vorteil, wenn das Kopplungselement 6 aus einem Kunststoff gefertigt ist. Bei ausreichender Verstellung der Randelmutter 19 kommt es zu einer reibschlüssigen Feststellung des Kopplungselementes 6, wodurch die Halteelemente 4 und damit die Druckbolzen 5 in einem bestimmten Radialabstand zu der zentralen Ausnehmung 2 und in einem bestimmten gegenseitigen Umfangsabstand fixiert werden. Der Verstellweg der Randelmutter 19 wird dabei durch Gewindestifte 26 begrenzt. Ist die Randelmutter 19 ausreichend weit von der Buchse 14 abgeschraubt bzw. von dem Flansch 21 der Buchse 14 beabstandet, so ist das Kopplungselement 6 freigestellt und drehbar auf dem Ansatz 15 der Grundplatte 3 gelagert.

Bei Verwendung des dargestellten Ausführungsbeispiels werden vor oder nach dem Aufschieben der Grundplatte 3 auf die Welle der Auswuchtmaschine alle Halteelemente 4 durch Betätigen eines Betätigungsabschnitts 27 eines Halteelementes 4 gedreht. Aufgrund des Reibschlusses zwischen dem in die Nut 16 des Kopplungselementes 6 eingesetzten und mit der Nut 17a des Halteelementes 4 zusammenwirkenden O-Rings 17 einerseits und durch die miteinander kämmenden Zahnkränze 4a, 6a andererseits ist eine weitgehend spielfreie gekoppelte Verdrehung der Halteelemente 4 möglich, ohne daß ein Durchrutschen des O-Rings bei der Drehbewegung befürchtet werden muß. Alle Druckbolzen 5 werden in gleichem Maße bewegt, um so ihre gegenseitige und radiale Lage im Verhältnis zu der zentralen Ausnehmung 2 zu verändern und an die entsprechende Lage der Befestigungslöcher einer Felge eines auszuwuchtenden Rades anzupassen. Durch die miteinander kämmenden Zahnkränze 4a, 6a werden evtl. auftretende Verschiebungen des Reibschlusses zwischen dem O-Ring 17 und der gegenüberliegenden Nut 17a des Halteelementes 4 ausgeglichen. Darüber hinaus wird durch die kämmenden Zahnkränze 4a, 6a ausgeschlossen, daß es zu einem Durchrutschen und einem Lösen der Reibverbindung kommen kann. Der Betätigungsabschnitt 27 wird durch einen über den äußeren Rand der Grundplatte 3 bereichsweise überstehenden Abschnitt des Zahnkranzes 4a des Halteelementes 4 gebildet. Dabei weist bei der dargestellten Ausführungsform jedes Halteelement 4 einen Betätigungsabschnitt 27 auf, so daß der Radial- und der Umfangsabstand der Druckbolzen 5 durch Betätigung eines Betätigungsabschnittes 27 eines beliebigen Halteelementes 4 verstellt werden kann. Dadurch wird die Voreinstellung der Druckbolzen 5 auf einen Lochkreisdurchmesser von Befestigungslöchern einer Felge wesentlich vereinfacht.

## Patentansprüche

1. Haltevorrichtung (1) für eine Felge eines Fahrzeugrades, mit einer eine zentrale Ausnehmung (2) aufweisenden Grundplatte (3) zum Aufschieben auf die Welle einer Auswuchtmaschine, mit einer Mehrzahl von drehbar gelagerten Halteelementen (4) und mit wenigstens einem zu der zentralen Ausnehmung (2) koaxial angeordneten und auf der Grundplatte (3) drehbar gelagerten Kopplungselement (6), wobei die Halteelemente (4) und das Kopplungselement (6) zusammenwirkende Kopplungsmittel zur formschlüssigen Kopplung der Drehbewegung der Halteelemente (4) aufweisen und jedes Halteelement (4) ein Haltemittel für die Felge aufweist und wobei die Haltevorrichtung eine Feststelleinrichtung (18) zum bedarfsweisen Feststellen der Halteelemente (4) aufweist, **dadurch gekennzeichnet, daß** die Halteelemente (4) und das Kopplungselement (6) zusätzlich zu den den Formschluß bewirkenden Kopplungsmitteln weitere Kopplungsmittel zur reibschlüssigen Kopplung der Drehbewegung der Halteelemente (4) aufweisen und daß die Feststelleinrichtung (18) ein Feststellelement mit wenigstens einem Feststellmittel zum reibschlüssigen Feststellen des Kopplungselementes (6) aufweist, wobei durch Verstellen des Feststellelementes eine Anpreßkraft auf das Kopplungselement (6) ausgeübt wird.

2. Haltevorrichtung nach Anspruch 1, **dadurch gekennzeichnet, daß** die weiteren Kopplungsmittel (6) durch eine reibschlüssige Verbindung zwischen wenigstens einer Umfangsfläche des Halteelementes (4) und wenigstens einer Umfangsfläche des Kopplungselementes (6) gebildet sind.

3. Haltevorrichtung nach Anspruch 1 oder 2, **dadurch gekennzeichnet, daß** zwischen der Umfangsfläche des Halteelementes (4) und der Umfangsfläche des Kopplungselementes (6) wenigstens ein Reibmittel angeordnet ist.

4. Haltevorrichtung nach einem der vorhergehenden Ansprüche, **dadurch gekennzeichnet, daß** das Halteelement (4) als Satellitenrad und das Kopplungselement (6) als Sonnenrad ausgebildet sind und ein Planetengetriebe bilden, wobei die formschlüssigen Kopplungsmittel durch miteinander kämmende Zahnkränze (4a, 6a) des Halteelementes (4) und des Kopplungselementes (6) gebildet sind.

5. Haltevorrichtung nach einem der vorhergehenden Ansprüche, **dadurch gekennzeichnet, daß** der Zahnkranz (4a) des Halteelementes (4) wenigstens eine Umfangsnut (17a) und/oder der Zahnkranz (6a) des Kopplungselementes (6) wenigstens eine Umfangsnut (16) aufweisen und daß zur Bildung einer reibschlüssigen Verbindung zwischen dem Halteelement (4) und dem Kopplungselement (6) wenigstens ein Reibmittel in die Umfangsnut (17a) des Halteelementes (4) und/oder in die Umfangsnut (16) des Kopplungselementes (6) eingebettet ist.

6. Haltevorrichtung nach einem der vorhergehenden Ansprüche, **dadurch gekennzeichnet, daß** das Reibmittel durch einen O-Ring (17) gebildet wird.

7. Haltevorrichtung nach einem der vorhergehenden Ansprüche, **dadurch gekennzeichnet, daß** die Feststelleinrichtung (18) ein Feststellelement mit wenigstens einem Feststellmittel zum formschlüssigen Feststellen des Kopplungselementes (6) aufweist.

8. Haltevorrichtung nach einem der vorhergehenden Ansprüche, **dadurch gekennzeichnet, daß** das Feststellelement koaxial zum Kopplungselement (6) und in axialer Richtung relativ zum Kopplungselement (6) verstellbar angeordnet ist und daß die Feststelleinrichtung (18) derart ausgebildet ist, daß durch Verstellen des Feststellelementes das Kopplungselement (6) über das Feststellmittel mit einer zum Feststellen ausreichenden Haltekraft beaufschlagbar ist.

9. Haltevorrichtung nach einem der vorhergehenden Ansprüche, **dadurch gekennzeichnet, daß** die Grundplatte (3) wenigstens eine Anschlagfläche (24) für eine Stirnseite des Kopplungselementes (6) aufweist und daß das Kopplungselement (6) beim Feststellen durch das Feststellmittel gegen die Anschlagfläche (24) anpreßbar ist.

10. Haltevorrichtung nach einem der vorhergehenden Ansprüche, **dadurch gekennzeichnet, daß** der Zahnkranz (4a) des Halteelementes (4) bereichsweise über den äußeren Rand der Grundplatte (3) übersteht und einen Betätigungsabschnitt (27) zum gekoppelten Verdrehen der Halteelemente (4) bildet.

11. Haltevorrichtung nach einem der vorhergehenden Ansprüche, **dadurch gekennzeichnet, daß** das Haltemittel durch einen exzentrisch zur Drehachse des Halteelementes (4) angeordneten einen Bolzenfuß (9) und einen Bolzenkopf (10) aufweisenden Druckbolzen (5) gebildet wird, wobei der Bolzenkopf (10) federbelastet und vorzugsweise lösbar mit dem Bolzenfuß (9) verbunden ist.

## Claims

1. Retaining device (1) for a rim of a vehicle wheel, having a baseplate (3) which has a central recess (2) for placing onto the shaft of a balancing machine, having a plurality of rotatably mounted retaining elements (4) and having at least one coupling element (6) which is arranged coaxially to the central recess (2) and mounted rotatably on the baseplate (3), wherein the retaining elements (4) and the coupling element (6) have interacting coupling means for form-fitting coupling of the rotary movement of the retaining elements (4), and each retaining element (4) has a retaining means for the rim and wherein the retaining device has a locking device (18) for locking the retaining elements (4) as required,
**characterised in**
**that** the retaining elements (4) and the coupling element (6) have further coupling means for frictional coupling of the rotary movement of the retaining elements (4) in addition to the coupling means effecting the form fit, and that the locking device (18) has a locking element with at least one locking means for frictional locking of the coupling element (6), wherein a compressive force is exerted on the coupling element (6) by adjustment of the locking element.

2. Retaining device according to Claim 1, **characterised in that** the further coupling means (6) are formed by a frictional connection between at least one circumferential face of the retaining element (4) and at least one circumferential face of the coupling element (6).

3. Retaining device according to Claim 1 or 2, **characterised in that** at least one friction means is arranged between the circumferential face of the retaining element (4) and the circumferential face of the coupling element (6).

4. Retaining device according to one of the preceding claims, **characterised in that** the retaining element (4) is configured as a satellite wheel and the coupling element (6) is configured as a sun wheel and form a planetary gear system, wherein the form-fitting coupling means are formed by toothed rims (4a, 6a) of the retaining element (4) and of the coupling element (6), which toothed rims mesh with each other.

5. Retaining device according to one of the preceding claims, **characterised in that** the toothed rim (4a) of the retaining element (4) has at least one circumferential groove (17a) and/or the toothed rim (6a) of the coupling element (6) has at least one circumferential groove (16), and that at least one friction means is embedded in the circumferential groove (17a) of the retaining element (6) and/or in the circumferential groove (16) of the coupling element (6) in order to form a frictional connection between the retaining element (4) and the coupling element (6).

6. Retaining device according to one of the preceding claims, **characterised in that** the friction means is formed by an O-ring (17).

7. Retaining device according to one of the preceding claims, **characterised in that** the locking device (18) has a locking element with at least one locking means for form-fitting locking of the coupling element (6).

8. Retaining device according to one of the preceding claims, **characterised in that** the locking element is arranged coaxially to the coupling element (6) and such that it can be adjusted in the axial direction relative to the coupling element (6), and that the locking device (18) is configured in such a manner that the coupling element (6) can be loaded with a retaining force sufficient for locking by means of the locking means by adjustment of the locking element.

9. Retaining device according to one of the preceding claims, **characterised in that** the baseplate (3) has at least one stop face (24) for an end face of the coupling element (6) and that the coupling element (6) can be pressed against the stop face (24) by the locking means during locking.

10. Retaining device according to one of the preceding claims, **characterised in that** the toothed rim (4a) of the retaining element (4) projects beyond the outer edge of the baseplate (3) in some regions and forms an actuation section (27) for coupled rotation of the retaining elements (4).

11. Retaining device according to one of the preceding claims, **characterised in that** the retaining means is formed by a pressure bolt (5) which is arranged eccentrically to the axis of rotation of the retaining element (4) and has a bolt foot (9) and a bolt head (10), wherein the bolt head (10) is connected to the bolt foot (9) in a spring-loaded and preferably detachable manner.

## Revendications

1. Dispositif de retenue (1) pour une jante d'une roue de véhicule, doté d'une plaque de base (3) présentant un évidement (2) central pour le coulissement sur l'arbre d'une machine d'équilibrage, d'une pluralité d'éléments de retenue (4) montés de façon rotative et d'au moins un élément d'accouplement (6) disposé sur le même axe que l'évidement (2) central et monté de façon rotative sur la plaque de base (3), les éléments de retenue (4) et l'élément d'accouplement (6) présentant des moyens d'accouplement interactifs pour l'accouplement par complémentarité de formes du mouvement de rotation des éléments de retenue (4) et chaque élément de retenue (4) présentant un moyen de retenue pour la jante et le dispositif de retenue présentant un dispositif de blocage (18) pour le blocage éventuel des éléments de retenue (4),
**caractérisé en**
**ce que** les éléments de retenue (4) et l'élément d'accouplement (6) présentent en supplément des moyens d'accouplement entraînant la complémentarité de formes d'autres moyens d'accouplement pour l'accouplement par friction du mouvement de rotation des éléments de retenue (4) et **en ce que** le dispositif de blocage (18) présente un élément de blocage avec au moins un moyen de blocage pour la fixation par friction de l'élément d'accouplement (6), une force de pression étant exercée sur l'élément d'accouplement (6) par le réglage de l'élément de blocage.

2. Dispositif de retenue selon la revendication 1, **caractérisé en ce que** les autres moyens d'accouplement (6) sont formés par une liaison par friction entre au moins une surface périphérique de l'élément de retenue (4) et au moins une surface périphérique de l'élément d'accouplement (6).

3. Dispositif de retenue selon la revendication 1 ou 2, **caractérisé en ce qu'**au moins un moyen de frottement est disposé entre la surface périphérique de l'élément de retenue (4) et la surface périphérique de l'élément d'accouplement (6).

4. Dispositif de retenue selon l'une des revendications précédentes, **caractérisé en ce que** l'élément de retenue (4) et l'élément d'accouplement (6) sont conçus respectivement comme roue satellite et roue solaire et forment un engrenage planétaire, les moyens d'accouplement par complémentarité de formes étant formés par des couronnes crantées (4a, 6a) s'imbriquant les unes avec les autres de l'élément de retenue (4) et de l'élément d'accouplement (6).

5. Dispositif de retenue selon l'une des revendications précédentes, **caractérisé en ce que** la couronne crantée (4a) de l'élément de retenue (4) présente au moins une rainure périphérique (17a) et/ou la couronne crantée (6a) de l'élément d'accouplement (6) au moins une rainure périphérique (16) et **en ce que**, pour former une liaison par friction entre l'élément de retenue (4) et l'élément d'accouplement (6), au moins un moyen de friction est enfoncé dans la rainure périphérique (17a) de l'élément de retenue (4) et/ou dans la rainure périphérique (16) de l'élément d'accouplement (6).

6. Dispositif de retenue selon l'une des revendications précédentes, **caractérisé en ce que** le moyen de friction est formé par un joint torique (17).

7. Dispositif de retenue selon l'une des revendications précédentes, **caractérisé en ce que** le dispositif de blocage (18) présente un élément de blocage avec au moins un moyen de blocage pour le blocage par complémentarité de formes de l'élément d'accouplement (6).

8. Dispositif de retenue selon l'une des revendications précédentes, **caractérisé en ce que** l'élément de blocage est disposé sur le même axe que l'élément d'accouplement (6) et dans la direction axiale de façon réglable par rapport à l'élément d'accouplement (6) et **en ce que** le dispositif de blocage (18) est conçu de telle sorte que, par le réglage de l'élément de blocage, l'élément d'accouplement (6) peut être sollicité par le moyen de blocage avec une force de retenue suffisante pour le blocage.

9. Dispositif de retenue selon l'une des revendications précédentes, **caractérisé en ce que** la plaque de base (3) présente au moins une surface de butée (24) pour un côté avant de l'élément d'accouplement (6) et **en ce que** l'élément d'accouplement (6) peut être pressé contre la surface de butée (24) lors du blocage par le moyen de blocage.

10. Dispositif de retenue selon l'une des revendications précédentes, **caractérisé en ce que** la couronne crantée (4a) de l'élément de retenue (4) dépasse par endroits du bord extérieur de la plaque de base (3) et forme un tronçon d'actionnement (27) pour la torsion couplée des éléments de retenue (4).

11. Dispositif de retenue selon l'une des revendications précédentes, **caractérisé en ce que** le moyen de retenue est formé par un boulon de pression (5) disposé de façon excentrée par rapport à l'axe de rotation de l'élément de retenue (4) et présentant une base de boulon (9) et une tête de boulon (10), la tête de boulon (10) étant sollicitée par ressort et étant reliée de préférence de façon amovible à la base de boulon (9).
